# FASCICULE DE BREVET EUROPEEN

(11) **EP 3 990 314 B1**
(45) Date de publication et mention de la délivrance du brevet: **09.08.2023**
(21) Numéro de dépôt: 20733978.9
(22) Date de dépôt: 18.06.2020
(51) Int. Cl.: B60R 21/0134, B60Q 9/00

(54) **PROCEDE DE PREVENTION D'UNE COLLISION D'UN VEHICULE AUTOMOBILE AVEC UN OBJET METTANT EN OEUVRE UN MODULE LUMINEUX**
VERFAHREN ZUR KOLLISIONSVERMEIDUNG EINES KRAFTFAHRZEUGES MIT EINEM OBJEKT MITTELS EINES LICHTMODULS
METHOD OF COLLISION PREVENTION OF AN AUTOMOBILE VEHICLE WITH AN OBJECT USING A LUMINOUS MODULE

(30) Priorité: 25.06.2019 FR 1906870
(43) Date de publication de la demande: 04.05.2022
(73) Titulaire: Valeo Vision, 93012 Bobigny Cedex (FR)
(72) Inventeur: BENAMAR, Fatima, 93012 BOBIGNY Cedex (FR); MIMOUN, Mickael, 93012 BOBIGNY Cedex (FR); MEZARI, Rezak, 93012 BOBIGNY Cedex (FR)
(74) Mandataire: Valeo Visibility
(86) Numéro de dépôt international: PCT/EP2020/067052
(87) Numéro de publication internationale: WO 2020/260144

(56) Documents cités:
- WO-A1-2006/092431
- WO-A1-2018/091563
- FR-A1- 2 979 311
- JP-A- 2018 163 482
- US-A1- 2011 238 309

## Description

L'invention concerne le domaine de l'éclairage et/ou de la signalisation automobile et de l'éclairage de l'intérieur de l'habitacle d'un véhicule automobile. Plus spécifiquement, l'invention concerne un procédé de prévention d'une collision d'un véhicule automobile avec un objet mettant en oeuvre un module lumineux d'un véhicule automobile.

Les véhicules automobiles emploient des systèmes de prévention de collision. Un tel système de prévention de collision comprend de façon connue un dispositif de détection d'un ou plusieurs objets susceptibles de rentrer en collision avec le véhicule, un système d'alerte comprenant un module lumineux permettant d'alerter le conducteur afin qu'il puisse adapter sa trajectoire et éviter ce ou ces objets. Ce système est en outre associé à un système de freinage autonome d'urgence (également appelé AEB, de l'anglais Autonomous Emergency Braking) apte à déclencher automatiquement le freinage du véhicule si le conducteur ne réagit pas ou si le risque est imminent. FR 2 979 311 A1 décrit un procédé selon le préambule de la revendication 1.

Toutefois, les systèmes d'alerte de ces systèmes de prévention de collision sont réduits soit à un simple voyant lumineux placé au niveau du tableau de bord et s'allumant lors de la détection d'un objet à risque soit à un module d'éclairage émettant un simple flash vers l'objet détecté, ce qui ne permet pas au conducteur du véhicule de discriminer le niveau de risque associé à l'objet et de déterminer quelle trajectoire adopter. Ceci est particulièrement problématique lorsque plusieurs objets sont détectés puisqu'une même alerte est émise pour tous les objets quel que soit le niveau de risque associé à chaque objet, engendrant ainsi des difficultés d'interprétation des alertes pour le conducteur.

En outre, afin de ne pas émettre des alertes de façon intempestive dès qu'un objet est détecté, l'alerte est généralement émise par le système d'alerte uniquement lorsque le risque de collision est avéré, ce qui ne laisse pas au conducteur le temps de réagir et entraîne le déclenchement du freinage autonome d'urgence de façon brutale.

Il existe ainsi un besoin pour un procédé de prévention de collision qui permette, d'une part, d'alerter le conducteur d'un risque de collision avec un objet suffisamment à l'avance pour qu'il puisse anticiper et adapter sa trajectoire sans déclencher de façon intempestive le système de freinage autonome d'urgence et, d'autre part, qui permette au conducteur de discriminer les niveaux de risque associés aux objets détectés de sorte à en faciliter l'interprétation.

A ces fins, l'invention a pour objet un procédé de prévention de collision d'un véhicule automobile hôte avec au moins un objet cible, le véhicule automobile hôte comportant un système de détection apte à détecter l'objet cible et un système d'alerte comprenant au moins un module lumineux, caractérisé en ce qu'il comporte les étapes suivantes :
a. Détection de l'objet cible et détermination d'une position et d'une vitesse de l'objet cible par le système de détection ;
b. Estimation d'une trajectoire critique susceptible d'être empruntée par l'objet cible pour entrer en collision avec le véhicule hôte en fonction de la position et de la vitesse de l'objet cible, la trajectoire critique étant associée à un couple risque de collision/temps de collision ;
c. Emission d'au moins une alerte lumineuse à destination du conducteur du véhicule hôte par le module lumineux du système d'alerte, le type de l'alerte lumineuse à émettre étant sélectionné en fonction du couple risque de collision/temps de collision de la trajectoire critique.

Selon l'invention, chaque objet cible détecté par le système de détection fait l'objet d'une modélisation permettant d'estimer une trajectoire critique pouvant mener à une collision avec le véhicule automobile hôte. Dès lors, il est possible d'alerter le conducteur du véhicule automobile hôte de la présence de l'objet suffisamment en avance pour qu'il anticipe et modifie sa trajectoire sans déclencher le système de freinage autonome d'urgence. En outre, l'invention permet de moduler le type d'alerte lumineuse émise par le système d'alerte en fonction du risque de collision et/ou du temps de collision estimé entre le véhicule hôte et l'objet cible. On évite ainsi de générer chez le conducteur des difficultés d'interprétation des alertes lumineuses émises par le système d'alerte, en lui permettant de différencier de façon claire un objet présentant un faible risque de collision d'un objet présentant un fort risque de collision.

On entend par trajectoire critique une trajectoire vraisemblable de l'objet cible pouvant mener à une collision avec le véhicule hôte. Il peut par exemple s'agir d'une trajectoire relative de l'objet cible par rapport au véhicule hôte, prenant en compte la trajectoire du véhicule hôte et notamment sa position et sa vitesse à l'instant de la détection de l'objet cible. On entend par risque de collision associée à la trajectoire critique estimée le risque de collision entre l'objet cible qui emprunterait ladite trajectoire critique et le véhicule hôte. On entend par temps de collision le temps nécessaire pour que l'objet cible entre en collision avec le véhicule hôte en empruntant ladite trajectoire critique.

Avantageusement, la détection de l'objet cible comprend le groupement en un unique objet cible de plusieurs obstacles détectés séparément par le système de détection et étant sensiblement voisins. Par exemple, le système de détection peut comprendre un ou plusieurs capteurs du véhicule hôte apte à détecter la présence d'un objet sur la route et à en estimer la vitesse et la position, et notamment un radar et/ou un lidar et/ou une caméra associés à un ou plusieurs calculateurs. Le cas échéant, le système de détection peut grouper plusieurs obstacles détectés séparément en un unique objet cible lorsque la distance séparant les obstacles est inférieure à une valeur seuil et/ou lorsque les vitesses des obstacles sont sensiblement identiques. De la sorte, une seule alerte lumineuse sera émise à destination du conducteur du véhicule hôte pour l'ensemble des obstacles supposés emprunter une même trajectoire critique, comme par exemple un groupe de personnes.

Selon l'invention, l'estimation d'une trajectoire critique susceptible d'être empruntée par l'objet cible comprend :
a. L'estimation d'une pluralité de trajectoires distinctes susceptibles d'être empruntées par l'objet cible pour entrer en collision avec le véhicule hôte en fonction de la position et de la vitesse de l'objet cible, chaque trajectoire étant associée à un couple risque de collision/temps de collision ;
b. La sélection d'une trajectoire critique parmi la pluralité de trajectoires en fonction du couple risque de collision/temps de collision de chacune des trajectoires de la pluralité de trajectoires.

On comprend ainsi que l'invention vise à modéliser, à partir des informations fournies par le système de détection au sujet de l'objet cible, plusieurs trajectoires susceptibles d'être empruntées par l'objet cible et de sélectionner la trajectoire vraisemblablement la plus dangereuse afin d'en alerter le conducteur. Avantageusement, chacune des trajectoires de la pluralité de trajectoires est estimée à partir de la position et de la vitesse de l'objet cible déterminée par le système de détection et de valeurs représentatives de la précision de détermination desdites position et vitesse de l'objet cible par le système de détection. En effet, le système de détection peut fournir des informations au sujet de l'objet cible selon un intervalle de confiance. Cette caractéristique permet de modéliser plusieurs trajectoires susceptibles d'être empruntées par l'objet cible en fonction de la marge d'erreur des capteurs du système de détection. Le cas échéant, le système de détection peut fournir des valeurs relatives à cette précision de détermination ou marge d'erreur, comme par exemple un écart type ou une variance, pour chacune des positions et vitesse déterminées de l'objet cible. L'estimation de chacune des trajectoires de la pluralité de trajectoires comprend ainsi la sélection d'une position et d'une vitesse potentielle de l'objet cible parmi un échantillon de positions et de vitesses situés dans un intervalle de confiance déterminé par la position et la vitesse déterminées de l'objet cible, par lesdites valeurs relatives à la précision de détermination de ces positions et de ces vitesses et par une loi de probabilité donnée, par exemple une loi normale.

Avantageusement, le risque de collision associé à chacune des trajectoires de la pluralité de trajectoires correspond à la probabilité d'une rencontre entre ladite trajectoire et une position du véhicule hôte estimée à un instant donné. Par exemple, le risque de collision associé à chacune des trajectoires est déterminé à partir de la probabilité que l'objet cible présente la position et vitesse potentielles employées pour estimer ladite trajectoire. Si on le souhaite, la position du véhicule hôte estimée à un instant donné est modélisée par un gabarit déterminé en fonction de la position du véhicule hôte estimée par un système de navigation du véhicule hôte et d'une valeur représentative de la précision d'estimation de ladite position par le système de navigation. En effet, de la même manière que pour le système de détection, le système de navigation du véhicule hôte peut estimer la position du véhicule hôte avec une marge d'erreur. Le cas échéant, plusieurs gabarits peuvent être déterminés pour le véhicule hôte, et chaque trajectoire estimée de la pluralité de trajectoires peut présenter un risque de collision différent avec chacun de ces gabarits. Par exemple, le risque de collision d'une trajectoire estimée avec un gabarit donné peut correspondre à la multiplication de la probabilité que l'objet cible présente la position potentielle avec la probabilité que l'objet cible présente la vitesse potentielle et la probabilité que le véhicule hôte soit présent dans le gabarit donné.

Avantageusement, le temps de collision associé à chacune des trajectoires de la pluralité de trajectoires correspond au temps nécessaire pour que l'objet cible parcourt ladite trajectoire et rencontre la position du véhicule hôte estimée à un instant donné, et notamment le gabarit donné.

Avantageusement, la trajectoire critique sélectionnée parmi la pluralité de trajectoires correspond à la trajectoire présentant le plus grand risque de collision et le plus petit temps de collision. De préférence, on présélectionne les trajectoires présentant le plus grand risque de collision puis on sélectionne parmi les trajectoires présélectionnées la trajectoire présentant le plus petit temps de collision.

Selon un mode de réalisation de l'invention, on sélectionne un niveau de risque associé à l'objet cible parmi une pluralité de niveaux de risque prédéterminés en fonction du couple risque de collision/temps de collision associé à la trajectoire critique de l'objet cible et dans lequel on sélectionne un type d'alerte lumineuse pour l'objet cible et correspondant au niveau de risque sélectionné. Par exemple, le niveau de risque peut être sélectionné au moyen seulement du risque de collision ou par une pondération du risque de collision par le temps de collision. Avantageusement, le type d'alerte lumineuse est en outre sélectionné en fonction du temps de collision associé à la trajectoire critique de l'objet cible.

Avantageusement, on émet une alerte lumineuse de même type pour tous les objets cibles détectés présentant sensiblement un même niveau de risque. Le cas échéant, on peut émettre une alerte lumineuse uniquement pour les objets cibles détectés présentant le même niveau de risque le plus élevé. Par exemple, on émet une alerte lumineuse unique pour alerter le conducteur de la présence des objets cibles détectés présentant le même niveau de risque le plus élevé, notamment un pictogramme lumineux centré entre lesdits objets cibles détectés.

Avantageusement, le système d'alerte comporte une pluralité de modules lumineux, chaque module lumineux du système d'alerte formant tout ou partie d'un système d'éclairage de la route du véhicule hôte, d'un système de signalisation lumineuse du véhicule hôte et/ou d'un système d'éclairage intérieur du véhicule hôte, la sélection du type d'alerte lumineuse comprenant la sélection, notamment en fonction du niveau de risque associé à l'objet cible, d'un ou plusieurs desdits modules lumineux du système d'alerte à activer pour l'émission d'un faisceau lumineux réalisant ladite alerte lumineuse. Par exemple, pour un niveau de risque faible, l'alerte lumineuse sera réalisée par activation d'un voyant au niveau du tableau de bord du véhicule hôte, tandis que pour un niveau de risque moyen, l'alerte lumineuse sera réalisée par activation d'un module lumineux du système d'éclairage intérieur du véhicule hôte et pour un niveau de risque élevé, l'alerte lumineuse sera réalisée par activation d'un module lumineux du système d'éclairage de la route du véhicule hôte.

Le cas échéant, la sélection du type d'alerte lumineuse peut comprendre la sélection, notamment en fonction du temps de collision, d'une zone de la route prédéterminée pour l'émission d'un faisceau lumineux dans ladite zone de la route réalisant ladite alerte lumineuse et/ou d'un type de faisceau lumineux à émettre. En effet, il peut être avantageux de différencier les types d'alertes lumineuses émises lorsque le risque de collision est élevé mais que l'objet cible est relativement éloigné du véhicule hôte ou au contraire lorsqu'il en est proche. Par exemple, pour un temps de collision important et un risque de collision élevé, l'alerte lumineuse pourra être réalisée sous la forme d'un flash lumineux éclairant l'objet cible tandis que pour un temps de collision court et un risque de collision élevé, l'alerte lumineuse pourra être réalisée sous la forme d'une projection de pictogrammes au sol dans une zone de la route proche du véhicule hôte. On comprend ainsi que le type d'alerte lumineuse peut évoluer au fur et à mesure de l'évolution du risque de collision et/ou du temps de collision associé à l'objet cible.

L'invention a également pour objet un programme d'ordinateur comprenant un code de programme qui est conçu pour mettre en oeuvre le procédé selon l'invention.

L'invention a également pour objet un support de données sur lequel est enregistré le programme d'ordinateur selon l'invention.

La présente invention est maintenant décrite à l'aide d'exemples uniquement illustratifs et nullement limitatifs de la portée de l'invention, et à partir des illustrations jointes, dans lesquelles :
[fig.1] représente un procédé de prévention de collision d'un véhicule automobile hôte avec un objet cible selon un mode de réalisation de l'invention ;
[fig.2] illustre une première étape du procédé de la [Fig. 1] ;
[fig.3] illustre une seconde étape du procédé de la [Fig. 1] ;
[fig.4] illustre une troisième étape du procédé de la [Fig. 1] ;
[fig.5] illustre une quatrième étape du procédé de la [Fig. 1] ; et
[fig.6] illustre une variante de mise en oeuvre du procédé de la [Fig. 1].

Dans la description qui suit, les éléments identiques, par structure ou par fonction, apparaissant sur différentes figures conservent, sauf précision contraire, les mêmes références

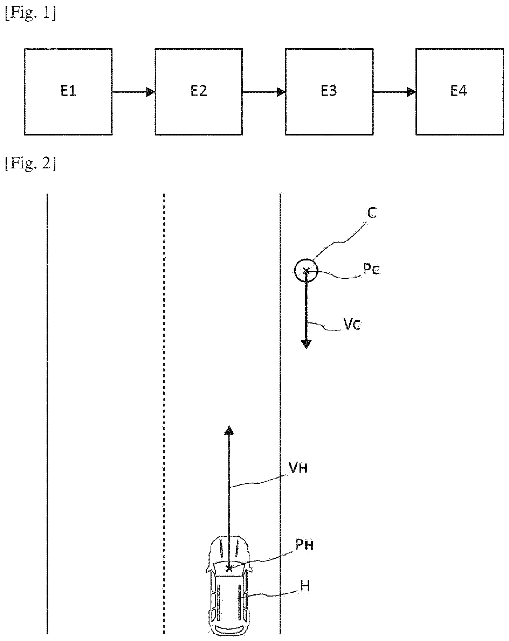

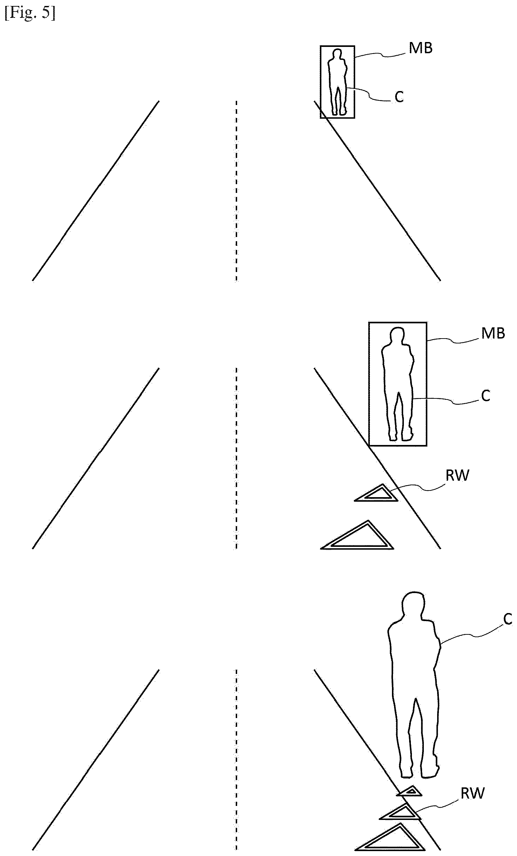

On a représenté en [fig.1] un procédé de prévention de collision d'un véhicule automobile hôte H avec un objet cible C selon un mode de réalisation de l'invention. Les différentes étapes E1 à E4 du procédé seront décrites en liaison avec respectivement les [Fig. 2] à [Fig. 5].

Lors d'une première étape E1, un système de détection du véhicule hôte H, par exemple comprenant une caméra, détecte la présence d'un objet cible C, par exemple un piéton, sur la route. Le système de détection détermine en outre la position PC et la vitesse VC de l'objet cible. Par ailleurs, un système de navigation du véhicule hôte H fournit au procédé la vitesse VH et la position PH du véhicule hôte à l'instant de la détection de l'objet cible T. La [fig.2] représente une vue de dessus de la scène de route avec le véhicule hôte H et l'objet cible C ainsi que leurs positions et vitesses respectives.

En outre, chacun des systèmes de détection et de navigation du véhicule hôte H fournit pour chacune des valeurs de position PH, PC et de vitesse VH, VC une variance traduisant la marge d'erreur statistique de ce système dans la détermination de ces valeurs.

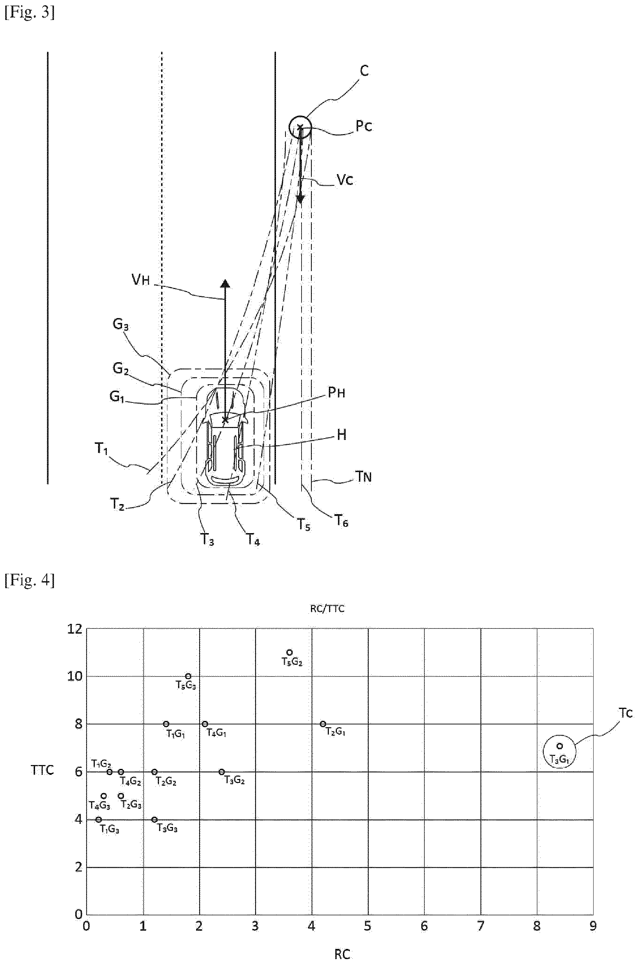

Lors d'une deuxième étape E2, un calculateur du véhicule hôte détermine des échantillons de N valeurs de positions potentielles et de vitesses potentielles de l'objet cible situés dans des intervalles de confiance centrés respectivement autour des valeurs PC et VC déterminées par le système de détection et dont les tailles sont définies par les variances relatives à ces valeurs fournies par le système de détection. Pour chacune de ces paires de position et de vitesse potentielles, le calculateur procède à une estimation d'une trajectoire T1 à TN susceptible d'être empruntée par l'objet cible C. Chacune de ces trajectoires Ti présente ainsi une probabilité d'être empruntée par l'objet cible C, à savoir la probabilité que l'objet cible C soit effectivement dans la position potentielle engendrant la trajectoire Ti multipliée par la probabilité que l'objet cible C se déplace à la vitesse potentielle engendrant la trajectoire Ti, ces probabilités étant par exemple calculées selon une loi normale. On a représenté en [fig.3] ces différentes trajectoires T1 à TN, étant entendu que dans l'exemple de la [Fig. 3], les trajectoires T1 à TN de l'objet cible C sont des trajectoires relatives de l'objet cible C visà-vis du véhicule hôte H et prenant ainsi en compte le déplacement du véhicule hôte H lui-même.

Le calculateur détermine par ailleurs plusieurs gabarits G1 à GM représentant un échantillon de positions potentielles du véhicule hôte H déterminées en fonction des valeurs PH et VH fournies par le système de navigation du véhicule hôte et des variances relatives à ces valeurs. Chacun des gabarits Gj présente également une probabilité traduisant la probabilité que le véhicule hôte H soit présent dans le gabarit Gj.

On constate à la vue de la [fig.3] que certaines des trajectoires Ti sont susceptibles de rencontrer au moins l'un des gabarits Gj. Ces trajectoires Ti se voient ainsi associées un risque de collision RC avec ce gabarit Gj, correspondant à la probabilité que l'objet cible C emprunte la trajectoire Ti multipliée par la probabilité que le véhicule hôte H soit présent dans le gabarit Gj. En outre, le calculateur associe en outre à chacune des trajectoires Ti susceptibles de rencontrer au moins l'un des gabarits Gj un temps de collision TTC correspondant au temps nécessaire pour que l'objet cible C parcourt ladite trajectoire Ti et rencontre le gabarit Gj.

Lors d'une troisième étape E3, le calculateur sélectionne une trajectoire TC, dite critique, parmi la pluralité de trajectoires Ti susceptibles d'être empruntées par l'objet cible C pour entrer en collision avec le véhicule hôte H. A cet effet, le calculateur sélectionne la trajectoire présentant le plus grand risque de collision RC. Dans le cas où plusieurs trajectoires présenteraient des risques de collision maximum sensiblement identiques, le calculateur sélectionnerait la trajectoire présentant le plus petit temps de collision. On a représenté en [fig.4] les différents couples risque de collision RC/temps de collision TTC pour chacune des trajectoires Ti susceptibles de rencontrer l'un des gabarits Gj. Dans l'exemple décrit, la trajectoire T3G1 est ainsi sélectionnée comme trajectoire critique TC.

Lors d'une quatrième étape E4, le calculateur sélectionne un niveau de risque associé à l'objet cible C parmi une pluralité de niveaux de risque allant de « très faible » à « très élevé » en fonction de la valeur du risque de collision RC de la trajectoire critique TC.

Le véhicule hôte H comporte un système d'alerte comprenant une pluralité de modules lumineux, chaque module lumineux formant tout ou partie d'un système d'éclairage de la route du véhicule hôte, d'un système de signalisation lumineuse du véhicule hôte, d'un système d'éclairage intérieur du véhicule hôte. Le calculateur sélectionne ainsi, en fonction du niveau de risque associé à l'objet cible C, l'un ou plusieurs de ces modules pour émettre un faisceau lumineux réalisant une alerte lumineuse dont le type est ainsi directement déterminé par le niveau de risque associé à l'objet cible C.

Dans l'exemple décrit, le calculateur a sélectionné comme niveau de risque associé à l'objet cible le niveau « très élevé », lequel correspond à l'activation d'un module d'éclairage de la route du véhicule hôte. Dans le mode de réalisation décrit, le niveau de risque « très faible » peut être associé à l'activation d'un voyant sur le tableau de bord du véhicule hôte ; le niveau de risque « faible » à l'émission d'un faisceau lumineux d'un premier type par un module d'éclairage intérieur du véhicule hôte, le niveau de risque « moyen » à l'émission d'un faisceau lumineux d'un deuxième type par le module d'éclairage intérieur du véhicule hôte et le niveau de risque « élevé » à l'émission d'un faisceau lumineux d'un troisième type par le module d'éclairage intérieur du véhicule. Par exemple, le module d'éclairage intérieur comporte une bande de diodes électroluminescentes agencées dans l'habitacle pour suivre le contour de l'habitacle, chaque diode étant apte à émettre de façon sélective un faisceau lumineux élémentaire dont la couleur et l'intensité sont contrôlées par le calculateur. L'alerte lumineuse associée au niveau de risque « faible » correspond à l'émission simultanée et continue d'un faisceau lumineux élémentaire d'une première couleur, par exemple jaune, par toutes les diodes électroluminescentes du module d'éclairage intérieur. L'alerte lumineuse associée au niveau de risque « moyen » correspond à l'émission simultanée et périodique d'un faisceau lumineux élémentaire d'une deuxième couleur, par exemple orange, par toutes les diodes électroluminescentes du module d'éclairage intérieur. L'alerte lumineuse associée au niveau de risque « élevé » correspond à l'émission séquentielle d'un faisceau lumineux élémentaire d'une troisième couleur, par exemple rouge, par chacune des diodes électroluminescentes du module d'éclairage intérieur. Les alertes lumineuses associées aux niveaux de risque « faible » à « élevé » qui ont été décrites ici sont des modes de réalisation non limitatifs, étant entendu que d'autres types de faisceaux lumineux, d'autres types de modules d'éclairage intérieur, voire d'autres types de modules lumineux du véhicule automobile, peuvent être sélectionnés pour l'émission des alertes lumineuses associés à ces niveaux de risques.

En outre, le calculateur sélectionne, en fonction du temps de collision TTC associé à la trajectoire critique TC un type de faisceau lumineux à émettre par ledit module et une zone de la route dans lequel émettre ce faisceau lumineux. Dans l'exemple décrit, le niveau de risque « très élevé » et le TTC a conduit à la sélection et à l'émission par le module d'éclairage de la route d'un masque blanc MB centré sur l'objet cible C. Cette alerte lumineuse a été ainsi représentée schématiquement sur le scénario du haut de la [fig.5].

Il va de soi qu'au fur et à mesure du déplacement du véhicule hôte H et/ou de l'objet cible C, le niveau de risque et le temps de collision TTC associé à l'objet cible peut évoluer. On a ainsi représenté en [fig.5] dans les scénarios du milieu et du bas le rapprochement de l'objet cible C avec le véhicule hôte H et donc la diminution du temps de collision TTC. Ainsi, le niveau de risque reste « très élevé » au fur et à mesure du rapprochement, si bien que le module d'éclairage reste sélectionné pour l'émission de l'alerte lumineuse. En revanche, le temps de collision TTC diminuant, le type de faisceau lumineux réalisant l'alerte lumineuse ainsi que la zone de la route dans laquelle le faisceau lumineux doit être émis peut évoluer. Dans l'exemple du scénario du milieu de la [Fig. 5], correspondant à un TTC moyen, le module d'éclairage émet à la fois un masque blanc MB centré sur l'objet cible C et un ensemble de pictogrammes RW au sol. Dans l'exemple du bas de la [Fig. 5], correspondant à un TTC court, le module d'éclairage émet uniquement un ensemble de pictogrammes RW au sol.

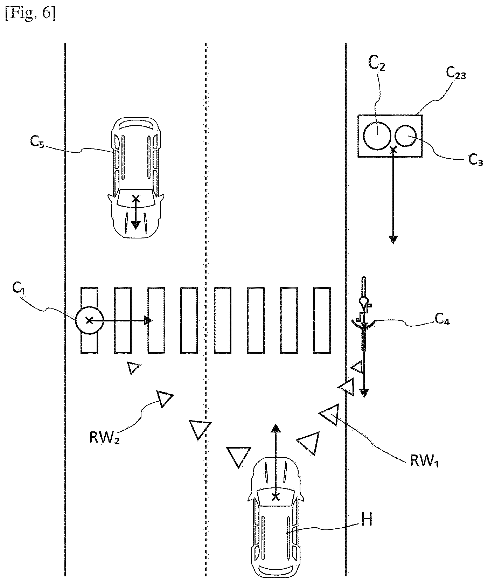

On a représenté en [fig.6] une vue de dessus d'une scène de route dans laquelle une variante du procédé de la [Fig. 1] est mis en oeuvre. Dans ce scénario, le système de détection du véhicule hôte V détecte la présence de plusieurs objets cibles, à savoir un piéton traversant C1, deux piétons C2 et C3 marchant côte à côte, un vélo C4 et un véhicule venant en sens inverse C5.

Dans l'exemple décrit de la [fig.6], le procédé selon l'invention procède, à l'issue de l'étape E1 de la [Fig. 2], à un regroupement des objets détectés séparément et présentant une proximité spatiale et un unique objet cible, comme par exemple les piétons C2 et C3 en un unique objet cible C23.

En outre, dans l'exemple décrit, chacun des objets cibles C1, C23, C4 et C5 se voit associé, aux étapes E2 et E3, à une trajectoire critique et à un couple risque de collision/temps de collision. Le calculateur procède ainsi lors de l'étape E4 à une détermination du niveau de risque associé à chacun de ces objets cibles. A la différence de la [fig.5] et de l'étape E4 du procédé de la [Fig. 1], une seule et même alerte lumineuse est ainsi émise pour les objets cibles présentant le même niveau de risque le plus élevé, les autres objets cibles de niveau de risque plus faible ne faisant l'objet d'aucune alerte lumineuse. Par exemple, les objets C4 et C1 présentent un même niveau de risque « très élevé » tandis que les objets C23 et C5 présentent un niveau de risque plus faible. Deux faisceaux lumineux RW1 et RW2 sous la forme de pictogrammes sont ainsi émis par le module d'éclairage de la route du véhicule hôte H pour alerter le conducteur. Dans une variante non décrite, un unique faisceau lumineux pourrait être émis entre les objets C4 et C1 afin d'alerter, via une unique alerte, le conducteur de la présence de deux obstacles présentant un même niveau de risque.

La description qui précède explique clairement comment l'invention permet d'atteindre les objectifs qu'elle s'est fixée, et notamment en proposant un procédé de prévention de collision dans lequel chaque objet cible détecté fait l'objet d'une modélisation permettant d'estimer une trajectoire critique pouvant mener à une collision avec le véhicule automobile hôte et dans lequel le type d'alerte lumineuse émise par le système d'alerte en fonction du risque de collision et/ou du temps de collision estimé entre le véhicule hôte et l'objet cible. On assure ainsi que le conducteur est prévenu de la présence de l'objet cible suffisamment à l'avance pour éviter un déclenchement du freinage autonome d'urgence et qu'il peut en outre interpréter de façon claire le risque de collision associé à l'objet cible et transcrit par l'alerte lumineuse émise.

En tout état de cause, l'invention ne saurait se limiter aux modes de réalisation spécifiquement décrits dans ce document, et s'étend en particulier à tous moyens équivalents et à toute combinaison techniquement opérante de ces moyens. On pourra notamment envisager tout autre type d'alerte lumineuse que celles décrites et notamment toute alerte lumineuse résultant de l'émission simultanée, synchrone ou séquentielle de plusieurs faisceaux lumineux par différents modules lumineux.

## Revendications

1. Procédé de prévention de collision d'un véhicule automobile hôte (H) avec au moins un objet cible (C), le véhicule automobile hôte comportant un système de détection apte à détecter l'objet cible et un système d'alerte comprenant au moins un module lumineux, comportant les étapes suivantes :
a. (E1) Détection de l'objet cible et détermination d'une position (PC) et d'une vitesse (VC) de l'objet cible par le système de détection ;
b. (E2, E3) Estimation d'une trajectoire critique (TC) susceptible d'être empruntée par l'objet cible pour entrer en collision avec le véhicule hôte en fonction de la position et de la vitesse de l'objet cible, la trajectoire critique étant associée à un couple risque de collision (RC)/temps de collision (TTC) ;
c. (E4) Emission d'au moins une alerte lumineuse (MB, RW) à destination du conducteur du véhicule hôte par le module lumineux du système d'alerte, le type de l'alerte lumineuse à émettre étant sélectionné en fonction du couple risque de collision/temps de collision de la trajectoire critique. et **caractérisé en ce que** l'estimation d'une trajectoire critique (TC) susceptible d'être empruntée par l'objet cible (T) comprend :
a. (E2) L'estimation d'une pluralité de trajectoires (Ti) distinctes susceptibles d'être empruntées par l'objet cible pour entrer en collision avec le véhicule hôte (H) en fonction de la position (PC) et de la vitesse (VC) de l'objet cible, chaque trajectoire étant associée à un couple risque de collision (RC) /temps de collision (TTC);
b. (E3) La sélection d'une trajectoire critique (TC) parmi la pluralité de trajectoires en fonction du couple risque de collision/temps de collision de chacune des trajectoires de la pluralité de trajectoires.

2. Procédé selon la revendication précédente, dans lequel la détection de l'objet cible (C) comprend le groupement en un unique objet cible (C23) de plusieurs obstacles (C2, C3) détectés séparément par le système de détection et étant sensiblement voisins.

3. Procédé selon la revendication précédente, dans lequel chacune des trajectoires (T i) de la pluralité de trajectoires est estimée à partir de la position (PC) et de la vitesse (VC) de l'objet cible (C) déterminée par le système de détection et de valeurs représentatives de la précision de détermination desdites position et vitesse de l'objet cible par le système de détection.

4. Procédé selon l'une des revendications 2 et 3, dans lequel le risque de collision (RC) associé à chacune des trajectoires (Ti) de la pluralité de trajectoires correspond à la probabilité d'une rencontre entre ladite trajectoire et une position (Gj) du véhicule hôte (H) estimée à un instant donné.

5. Procédé selon l'une des revendications 3 et 4, dans lequel la trajectoirecritique (TC) sélectionnée parmi la pluralité de trajectoires (T i) correspond à la trajectoire présentant le plus grand risque de collision(RC) et le plus petit temps de collision (TTC).

6. Procédé selon l'une des revendications précédentes, dans lequel on sélectionne un niveau de risque associé à l'objet cible (C) parmi une pluralité de niveaux de risque prédéterminés en fonction du couple risque de collision (RC)/temps de collision (TTC) associé à la trajectoire critique (TC) de l'objet cible et dans lequel on sélectionne un type d'alerte lumineuse pour l'objet cible et correspondant au niveau de risque sélectionné.

7. Procédé selon la revendication précédente, dans lequel on émet une alerte lumineuse (RW1, RW2) de même type pour tous les objets cibles (C1, C4) détectés présentant sensiblement un même niveau de risque.

8. Procédé selon l'une des revendications précédentes, dans lequel le système d'alerte comporte une pluralité de modules lumineux, chaque module lumineux du système d'alerte formant tout ou partie d'un système d'éclairage de la route du véhicule hôte (H), d'un système de signalisation lumineuse du véhicule hôte et/ou d'un système d'éclairage intérieur du véhicule hôte, la sélection du type d'alerte lumineuse comprenant la sélection d'un ou plusieurs desdits modules lumineux du système d'alerte à activer pour l'émission d'un faisceau lumineux réalisant ladite alerte lumineuse (MB, RW).

9. Procédé selon la revendication précédente, dans lequel la sélection du type d'alerte lumineuse comprend la sélection d'une zone de la route prédéterminée pour l'émission d'un faisceau lumineux (MB, RW) dans ladite zone de la route réalisant ladite alerte lumineuse.

10. Programme d'ordinateur comprenant un code de programme qui est conçu pour mettre en oeuvre le procédé selon l'une des revendications 1 à9.

11. Support de données sur lequel est enregistré le programme d'ordinateur selon la revendication 10.

## Patentansprüche

1. Verfahren zur Vermeidung einer Kollision eines Host-Kraftfahrzeugs (H) mit mindestens einem Zielobjekt (C), wobei das Host-Kraftfahrzeug ein Erkennungssystem, das zu fähig ist, das Zielobjekt zu erkennen, und ein Warnsystem umfasst, das mindestens ein Lichtmodul umfasst, umfassend die folgenden Schritte:
a. (E1) Erkennen des Zielobjekts und Bestimmen einer Position (PC) und einer Geschwindigkeit (VC) des Zielobjekts durch das Erkennungssystem;
b. (E2, E3) Schätzen eines kritischen Weges (TC), der vom Zielobjekt einschlagbar ist, um abhängig von der Position und Geschwindigkeit des Zielobjekts in Kollision mit dem Host-Kraftfahrzeug zu treten, wobei der kritische Weg mit einem Paar aus Kollisionsrisiko (RC)/Kollisionszeit (TTC) assoziiert ist;
c. (E4) Aussenden mindestens einer Lichtwarnung (MB, RW) an den Fahrer des Host-Fahrzeugs durch das Lichtmodul des Warnsystems, wobei die Art der auszusendenden Lichtwarnung abhängig von dem Paar aus Kollisionsrisiko/Kollisionszeit des kritischen Weges ausgewählt wird,
und **dadurch gekennzeichnet, dass** das Schätzen eines kritischen Weges (TC), der vom Zielobjekt (T) einschlagbar ist, umfasst:
a. (E2) Schätzen einer Vielzahl unterschiedlicher Wege (Ti), die vom Zielobjekt einschlagbar sind, um abhängig von der Position (PC) und der Geschwindigkeit (VC) des Zielobjekts in Kollision mit dem Host-Fahrzeug (H) zu treten, wobei jeder Weg mit einem Paar aus Kollisionsrisiko (RC)/Kollisionszeit (TTC) assoziiert ist;
b. (E3) Auswählen eines kritischen Weges (TC) aus der Vielzahl von Wegen abhängig von dem Paar aus Kollisionsrisiko/Kollisionszeit jedes der Wege der Vielzahl von Wegen.

2. Verfahren nach dem vorhergehenden Anspruch, wobei Erkennen des Zielobjekts (C) das Gruppieren mehrerer Hindernisse (C2, C3), die vom Erkennungssystem getrennt erkannt und im Wesentlichen benachbart sind, zu einem einzigen Zielobjekt (C23) umfasst.

3. Verfahren nach dem vorhergehenden Anspruch, wobei jeder der Wege (Ti) der Vielzahl von Wegen auf Grundlage der Position (PC) und der Geschwindigkeit (VC) des Zielobjekts (C) geschätzt wird, bestimmt vom Erkennungssystem und von Werten, die für die Genauigkeit der Bestimmung der Position und Geschwindigkeit des Zielobjekts durch das Erkennungssystem repräsentativ sind.

4. Verfahren nach einem der Ansprüche 2 und 3, wobei das Kollisionsrisiko (RC), das mit jedem der Wege (Ti) der Vielzahl von Wegen assoziiert ist, der Wahrscheinlichkeit eines Zusammentreffens des Weges und einer Position (Gj) des Host-Fahrzeugs (H), die zu einem bestimmten Zeitpunkt geschätzt wird, entspricht.

5. Verfahren nach einem der Ansprüche 3 und 4, wobei der kritische Weg (TC), der aus der Vielzahl von Wegen (Ti) ausgewählt wird, dem Weg entspricht, der das größte Kollisionsrisiko (RC) und die kürzeste Kollisionszeit (TTC) aufweist.

6. Verfahren nach einem der vorhergehenden Ansprüche, wobei aus einer Vielzahl von Risikostufen, die abhängig von dem Paar aus Kollisionsrisiko (RC)/Kollisionszeit (TTC) vorbestimmt sind, eine mit dem Zielobjekt (C) assoziierte Risikostufe ausgewählt wird, die mit dem kritischen Weg (TC) des Zielobjekts assoziiert ist, und eine Art von Lichtwarnung für das Zielobjekt ausgewählt wird, die der ausgewählten Risikostufe entspricht.

7. Verfahren nach dem vorhergehenden Anspruch, wobei eine Lichtwarnung (RW1, RW2) derselben Art für alle Zielobjekte (C1, C4) ausgegeben wird, die im Wesentlichen eine selbe Risikostufe aufweisen.

8. Verfahren nach einem der vorhergehenden Ansprüche, wobei das Warnsystem eine Vielzahl von Lichtmodulen umfasst, wobei jedes Lichtmodul des Warnsystems das gesamte oder einen Teil eines Straßenbeleuchtungssystems des Host-Fahrzeugs (H), eines Lichtsignalsystems des Host-Fahrzeugs und/oder eines Innenraumbeleuchtungssystems des Host-Fahrzeugs bildet und wobei das Auswählen der Art des Warnsystems das Auswählen eines oder mehrerer der Lichtmodule des Warnsystems umfasst, das für das Aussenden eines Lichtstrahls, der die Lichtwarnung (MB, RW) realisiert, aktiviert werden soll.

9. Verfahren nach dem vorhergehenden Anspruch, wobei das Auswählen der Art der Lichtwarnung das Auswählen eines Straßenbereichs umfasst, der für das Aussenden eines Lichtstrahls (MB, RW) in dem Straßenbereich, in dem die Lichtwarnung realisiert wird, vorbestimmt ist.

10. Computerprogramm, das einen Programmcode umfasst, der dazu ausgelegt ist, das Verfahren nach einem der Ansprüche 1 bis 9 zu durchzuführen.

11. Speichermedium, auf dem das Computerprogramm nach Anspruch 10 gespeichert ist.

## Claims

1. Method for preventing a collision of a host motor vehicle (H) with at least one target object (C), the host motor vehicle comprising a detection system which is able to detect the target object and an alert system comprising at least one light module,
comprising the following steps:
a. (E1) the detection system detecting the target object and determining a position (PC) and a speed (VC) of the target object;
b. (E2, E3) estimating a critical trajectory (TC) which is liable to be followed by the target object so as to collide with the host vehicle depending on the position and on the speed of the target object, the critical trajectory being associated with a collision risk (RC)/collision time (TTC) pair;
c. (E4) the light module of the alert system emitting at least one light alert (MB, RW) for the driver of the host vehicle, the type of light alert to be emitted being selected depending on the collision risk/collision time pair of the critical trajectory,
and **characterized in that** estimating a critical trajectory (TC) which is liable to be followed by the target object (T) comprises:
a. (E2) estimating a plurality of distinct trajectories (Ti) which are liable to be followed by the target object so as to collide with the host vehicle (H) depending on the position (PC) and on the speed (VC) of the target object, each trajectory being associated with a collision risk (RC)/collision time (TTC) pair;
b. (E3) selecting a critical trajectory (TC) from among the plurality of trajectories depending on the collision risk/collision time pair of each of the trajectories in the plurality of trajectories.

2. Method according to the preceding claim, in which detecting the target object (C) comprises grouping into a single target object (C23) several obstacles (C2, C3) detected separately by the detection system and which are substantially neighbours.

3. Method according to the preceding claim, in which each of the trajectories (Ti) in the plurality of trajectories is estimated on the basis of the position (PC) and of the speed (VC) of the target object (C) determined by the detection system and of values which are representative of the precision with which said position and speed of the target object are determined by the detection system.

4. Method according to one of Claims 2 and 3, in which the collision risk (RC) associated with each of the trajectories (Ti) in the plurality of trajectories corresponds to the probability of a meeting between said trajectory and a position (Gj) of the host vehicle (H) estimated at a given instant.

5. Method according to one of Claims 3 and 4, in which the critical trajectory (TC) selected from among the plurality of trajectories (Ti) corresponds to the trajectory having the greatest collision risk (RC) and the smallest collision time (TTC).

6. Method according to one of the preceding claims, in which a level of risk associated with the target object (C)is selected from among a plurality of predetermined levels of risk depending on the collision risk (RC)/collision time (TTC) pair associated with the critical trajectory (TC) of the target object and in which a type of light alert is selected for the target object, corresponding to the selected level of risk.

7. Method according to the preceding claim, in which a light alert (RW1, RW2) of the same type is emitted for all the target objects (C1, C4) having substantially the same level of risk.

8. Method according to one of the preceding claims, in which the alert system comprises a plurality of light modules, each light module of the alert system forming all or part of a system for lighting the road of the host vehicle (H), of a light signalling system of the host vehicle and/or of an interior lighting system of the host vehicle, selecting the type of light alert comprising selecting one or more of said light modules of the alert system to be activated so as to emit a beam of light producing said light alert (MB, RW).

9. Method according to the preceding claim, in which selecting the type of light alert comprises selecting a predetermined area of the road so as to emit a beam of light (MB, RW) in said area of the road producing said light alert.

10. Computer program comprising computer code which is designed to implement the method according to one of Claims 1 to 9.

11. Data medium on which the computer program according to Claim 10 is stored.
